# NOUVEAU FASCICULE DE BREVET EUROPEEN

(11) **EP 0 802 764 B2**
(45) Date de publication et mention de la décision concernant l'opposition: **17.03.2004**
(45) Mention de la délivrance du brevet: 27.06.2001
(21) Numéro de dépôt: 96932634.7
(22) Date de dépôt: 23.09.1996
(51) Int. Cl.: A47L 23/20

(54) **PROCEDE ET DISPOSITIF DE CHAUFFAGE D'UNE GARNITURE INTERIEURE DE CHAUSSURE**
VORRICHTUNG UND VERFAHREN ZUM WÄRMEN EINER FÜTTERUNG FÜR SCHUHWERK
FOOTWEAR INSERT HEATING METHOD AND DEVICE

(30) Priorité: 11.10.1995 FR 9512120
(43) Date de publication de la demande: 29.10.1997
(73) Titulaire: Salomon S.A., 74370 Metz-Tessy (FR)
(72) Inventeur: DALVY, Olivier, F-74940 Annecy-le-Vieux (FR); GORLIEZ, Jean-Philippe, F-74540 Alby-sur-Chéran (FR)
(74) Mandataire: Altenburg, Udo, Dipl.-Phys.
(86) Numéro de dépôt international: PCT/FR1996/001480
(87) Numéro de publication internationale: WO 1997/013447

(56) Documents cités:
- EP-A- 0 291 257
- WO-A-88/06423
- DE-A- 2 623 405
- DE-A- 3 421 372
- DE-U- 29 502 189
- FR-A- 2 406 790
- US-A- 3 299 529
- US-A- 4 433 494
- US-A- 4 787 153
- US-A- 4 964 229

## Description

La présente invention a pour objet un procédé et un dispositif de chauffage en vue du thermoformage de l'intérieur d'une chaussure à tige externe rigide.

En effet, de telles chaussures, comme par exemple les chaussures de ski, ou encore les chaussures de montagne, chaussures de patin à glace, de patin à roues en ligne,...etc, doivent comporter une tige externe, en général constituée par une coque en matière plastique rigide mais pouvant également être en cuir épais et rigide pour les chaussures de montagne par exemple, qui doit assurer unetenue de l'ensemble pied-cheville, et éviter notamment les torsions de la cheville, et permettre une bonne transmission des efforts exercés par le pied, soit pour la conduite du ski ou de l'organe de glisse, soit pour la tenue en dévers pour la marche en montagne.

De telles tiges sont donc plus ou moins rigides et donc très inconfortables.

Pouraméliorerleconfortdetelleschaussures, celles-ci comportent une garniture intérieure, généralement constituée par un chausson amovible, et réalisée en des matériaux plus souples tels que des mousses.

De telles garnitures intérieures sont prévues pour envelopper un certain type de pied. Malheureusement, chacun a un pied qui diffère plus ou moins du pied "standard" ayant conduit à la confection de la garniture intérieure. Comme la tige externe rigide de la chaussure ne peut se déformer, il s'ensuit souvent pour le pied de l'utilisateur lacréation de points durs, douloureux, quelle que soit la souplesse de la garniture intérieure.

Pour remédier à ces inconvénients, il est connu, notamment dans le cas de la chaussure de ski, de réaliser la garniture intérieure d'une telle chaussure en un matériau thermoformabletel que du polyéthylène qui une fois porté à une température d'environ 120°-140° peut être conformé à la fois au pied de l'utilisateur et à la coque externe, jusqu'à épouser parfaitement la forme du pied de l'utilisateur.

Un tel procédé est par exemple décrit dans le EP 004 829. Ce brevet enseigne de chauffer la garniture intérieure, à l'aide d'un circuit électrique intégré à l'intérieur de celle-ci, après mise en place du pied à l'intérieur de la chaussure. Un tel processus s'est avéré peu réaliste et très coûteux sur le plan pratique.

D'autres solutions, proposées par exemple par le JP 246 876, consistent à chauffer la garniture intérieure après l'avoir sortie de la chaussure, soit simultanément par l'intérieur et l'extérieur après l'avoir mis dans une enceinte de chauffage appropriée, soit uniquement par l'extérieur, jusqu'à ce qu'elle atteigne la température uniforme de thermoformage, de l'ordre de 120°-140°, souhaitée.

Ces solutions ne donnent pas non plus satisfaction car elles présentent de nombreux inconvénients :
- nécessité de prévoir une enceinte de chauffage encombrante et coûteuse,'
- nécessité de manipulations de la garniture intérieure, pour l'enlever et la remettre en place à l'intérieur de la chaussure,
- risque de brûlure lors de la manipulation de la garniture intérieure, portée à plus de 120°, et sa remise en place à l'intérieur de la chaussure,
- perte de chaleur lors de ces manipulations de la garniture intérieure qui imposent un réchauffage de la garniture,
- risque d'inversion des garnitures intérieures gauche/droite lors de la remise en place dans la chaussure,
- durée du processus, car il n'est possible d'adapter qu'une seule garniture à la fois du fait des manipulations nécessaires.

Il n'est par ailleurs pas non plus concevable de mettre l'ensemble de la chaussure à l'intérieur de l'enceinte de chauffage parce que, d'une part, les matériaux constituant sa tige externe rigide risqueraient d'être détériorés par la chaleur, et que d'autre part, cette tige externe perdrait ses qualités de rigidité sous l'effet d'une telle chaleur et le thermoformage de la garniture intérieure n'aurait alors plus aucune signification.

Il est également connu d'utiliser des appareils de chauffage constitués généralement par un tuyau envoyant de l'air chaud à l'intérieur des chaussures de ski, en vue de les assécher ou de les réchauffer légèrement avant l'utilisation. Des appareils de ce genre sont décrits dans les documents DE-A-34 21 372 et DE-U-295 02 189. De tels appareils ne sont pas conçus pour une température supérieure à 40° et ne pourraient être appliqués directement à un thermoformage de garnitures intérieures à une température de l'ordre de 120°-140° sans risques de détériorer celles-ci.

Le but de la présente invention est donc de remédier à ces inconvénients et de proposer un procédé et un dispositif améliorés de chauffage des garnitures intérieures de chaussures qui permette le thermoformage de celles-ci tout en étant d'un coût et encombrement réduit, facile et rapide à mettre en oeuvre, et sans imposer de manipulations longues, fastidieuses, et susceptibles d'introduire des erreurs.

Ce but est atteint par le procédé de chauffage d'au moins une partie de gamiture intérieure de chaussure présentant une tige externe rigide selon l'invention, par le fait qu'il consiste à:
- envoyer par l'intermédiaire d'au moins une sortie sur au moins ladite partie de garniture, disposée à l'intérieur de la chaussure, de l'air chaud à une température comprise entre 120° et 140°,
- tout en garantissant une distance minimale prédéterminée entre chaque sortie d'air chaud et ladite partie de garniture.

En effet, ce procédé permet une mise en oeuvre très simple et très rapide du fait qu'il n'impose aucune manipulation, de sortie, rentrée, à l'intérieur de la chaussure de la garniture intérieure. Il est par ailleurs compatible avec une garniture fixée à l'intérieur de la chaussure. Enfin, on s'est aperçu, de façon non évidente à priori, que le chauffage direct de la gamiture disposée à l'intérieur de la chaussure ne risquait pas d'endommager ni de ramollir la tige externe de cette demière, puisque la température obtenue à l'extérieur de cette garniture ne dépasse en fait pas 80°C pour une température de thermoformage de l'ordre de 130°C.

Avantageusement, le procédé consiste également à disposer la chaussure à plat et à l'envers par rapport au système de distribution d'air chaud, de façon que la chaleur reste piégée à l'intérieur de la chaussure. De cette façon, l'air chaud, qui a toujours tendance à monter, reste piégé dans les zones du talon/cou de pied de la chaussure qui se retrouvent du fait de cette position les plus en hauteur et on obtient donc une température de chauffage plus homogène et constante dans ces zones qui sont justement les zones les plus sensibles et à thermoformer.

Bien évidemment, s'il étaitsouhaitabledethermoformer d'autres zones que celles citées ci-avant, ce seraient ces autres zones qui seraient placées en hauteur de façon à obtenir dans celles-ci le maximum de chaleur.

Selon l'invention, le dispositif de chauffage pour la mise en oeuvre du procédé selon l'invention comporte:
- au moins une buse de distribution d'air chaud à une température comprise entre 120°C et 140°C apte à être introduite à l'intérieur de chaque chaussure munie de sa garniture intérieure,
- des moyens de positionnement de la buse à l'intérieur de la chaussure.

De ce fait, l'utilisation de ce dispositif est très simple puisqu'il suffit d'enfiler la chaussure munie de sa garniture sur la buse de distribution d'air chaud et de mettre en route le chauffage, sans aucune autre manipulation supplémentaire.

Avantageusement, les moyens de positionnement de la buse à l'intérieur de la chaussure sont constitués par un siège apte à recevoir l'empeigne de la chaussure. Le siège garantit ainsi la mise en place, à l'envers, de la chaussure, c'est-à-dire avec ses zones à thermoformer situées le plus en hauteur.

Selon un mode de réalisation préféré, les moyens de positionnement de la buse à l'intérieur de la chaussure comportent également une butée limitant l'introduction de celle-ci à l'intérieur de la chaussure, et participant au positionnement de la buse à l'intérieur de la chaussure, cette butée constituant par ailleurs des moyens d'obturation de l'ouverture de la tige de la chaussure entre cette buse et la partie arrière de la tige, de façon à canaliser l'air chaud sur la partie cou de pied/languette de la gamiture intérieure.

De toute façon, l'invention sera mieux comprise et d'autres modes de réalisation de celle-ci seront mises en évidence à l'aide de la description qui suit en référence au dessin schématique annexé en représentant à titre d'exemple non limitatif un mode de réalisation préféré et dans lequel :
- la figure 1 est une vue en perspective d'un dispositif de chauffage selon l'invention en cours d'utilisation avec une chaussure de ski,
- la figure 2 est une vue en coupe selon II-II de la figure 1,
- la figure 3 est une vue en coupe selon III-III de la figure 1.

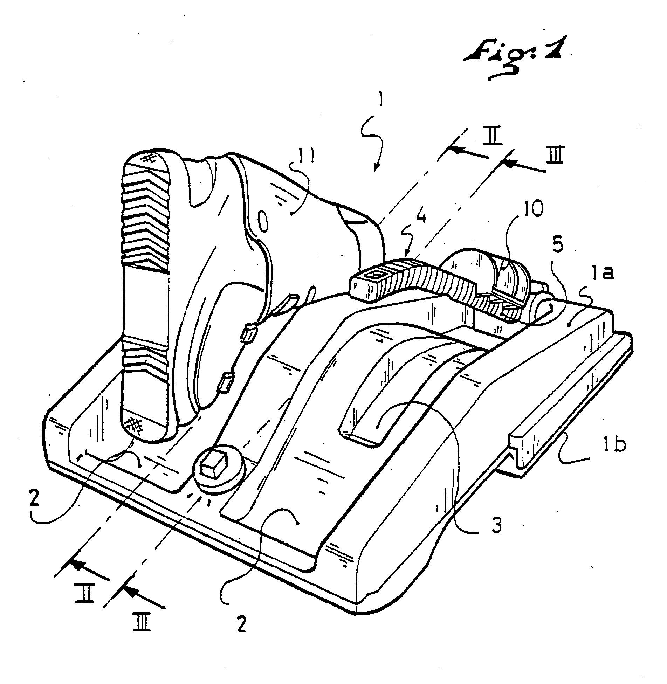

Le dispositif de chauffage selon l'invention des figures 1 à 3 est montré dans une utilisation avec des chaussures de ski alpin, il n'est bien entendu pas limité à une telle application et peut être conçu et utilisé avec tout autre type de chaussure présentant une tige externe rigide, non nécessairement en matière plastique et pouvant être par exemple en cuir très épais et rigide pour une chaussure de marche/randonnée, et une garniture intérieure de confort, fixe ou amovible, au moins partiellement thermoformable.

Dans l'exemple représenté, le dispositif de chauffage 1 se présente extérieurement comme une sorte de boite assez plate et de forme sensiblement parallépipédique destinée à être posée à plat par sa face inférieure 1 b sur une surface horizontale.

Ce dispositif présente sur sa face supérieure 1a deux dépressions 2 allongées et galbées, et destinées à constituer chacune un siège de réception et d'appui d'une chaussure 11.

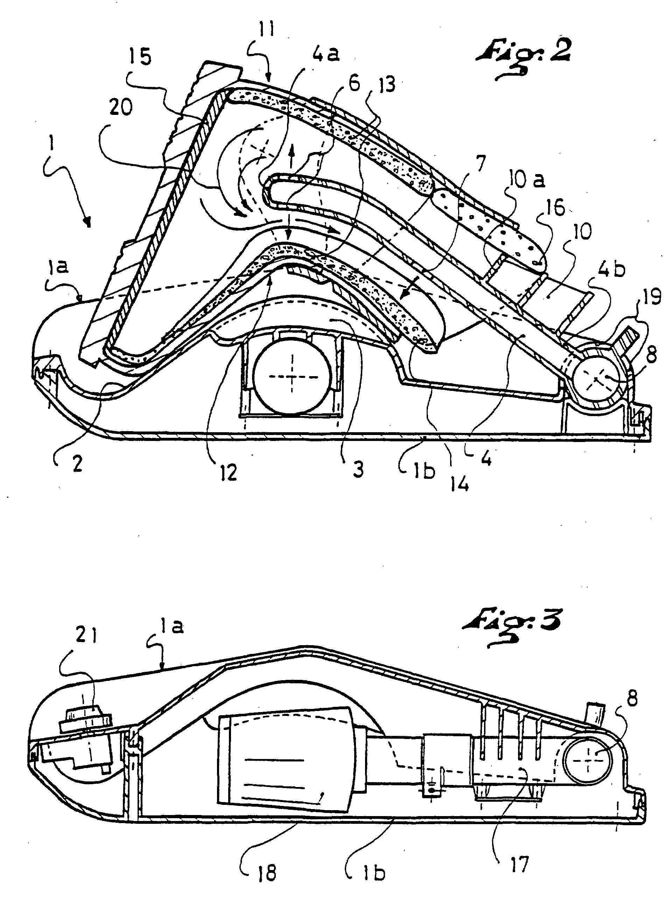

Comme le montre plus particulièrement la figure 2, le profil du siège de chaque chaussure est conçu defaçon àfournir un appui stable de la chaussure posée à l'envers, talon vers le haut, la chaussure étant en fait en appui sur le siège 2 par son empeigne 12, le sa partie dessus de pied/cou de pied.

En fait, le profil du siège 2 correspond à un profil moyen de l'empeigne de la chaussure en fonction des pointures et éventuellement du modèle de chaussure. L'important étant d'obtenir un appui stable de la chaussure dans cette position renversée.

A l'intérieur de chaque siège 2 est également prévue une dépression 3 de forme sensiblement rectangulaire destinée à recevoir et servir de logement à chacune des buses de chauffage 4, en dehors des périodes d'utilisation et pour le transport.

Chaque buse de chauffage 4 est constituée par tube de forme légèrement galbée à son extrémité libre 4a pour s'adapter à la forme intérieure de la chaussure. Bien entendu, le galbe de ce tube pourra être modifié en fonction du type de chaussure à thermoformer.

Comme représenté sur les figures 1 et 2, chaque buse est munie sur toute sa longueur d'ailettes ou cannelures périphérique externes 5 destinées à permettre une diffusion plus homogène à l'extérieur de la buse de l'air chaud circulant à l'extérieur de celle-ci, et également à éviter les risques de brûlure lorsqu'on saisit la buse, même en cas de soufflage d'air chaud.

Ces buses 4 peuvent avoir une section circulaire ou rectangulaire.

Comme le montre plus particulièrement la figure 2, chaque buse est fermée à son extrémité libre 4a, mais est munie à proximité de cette extrémité d'au moins deux ouvertures 6, diamétralement opposées.

Ces ouvertures peuvent être disposées de façon à être situées en regard des parties talon et cou de pied 13 de la garniture de la chaussure réalisées en matériau thermoformable. Elles peuvent également être disposées à 90° par rapport à la disposition représentée de façon à chauffer plus particulièrement les zones latérales, correspondant aux malléoles du pied, de la chaussure également réalisées en matériau thermoformable.

Ces deux dispositions peuvent également être combinées.

Par contre, la fermeture de la buse 4 à son extrémité libre 4a est particulièrement importante pour éviter une détérioration de la partie semelle externe 15 de la garniture par l'air chaud, notamment lorsque celle-ci n'est pas en matériau thermoformable ou lorsque la chaussure est enfilée trop loin sur la buse 4. Bien évidemment, dans le cas où la semelle interne serait destinée à être thermoformée, la buse serait conformée de façon à envoyer de l'air chaud uniformément sur la surface de cette semelle interne.

Une autre ouverture 7 est également prévue sur chaque buse de façon à se trouver en vis à vis de la partie languette 14 de la garniture de la chaussure.

Par cette disposition des ouvertures 6 et 7 de chaque buse est garantie une circulation d'air dans la zone talon/cou de pied 13 et la zone languette 14 de la garniture en matériau thermoformable.

Cette circulation d'air est représentée par les flèches 20.

Par ailleurs, chaque buse est raccordée à son autre extrémité 4b à une tubulure 8 d'alimentation en air chaud.

A proximité de cette extrémité 4b, chaque buse comporte à sa partie supérieure un demi cône 10 destiné à coopérer avec l'extrémité supérieure 16 de la chaussure pour limiter la pénétration de ladite buse à l'intérieur de la chaussure.

Ce demi cône 10 est dans l'exemple représenté constitué d'une série de trois demi disques 10a correspondant chacun à la demi ouverture supérieure d'une chaussure selon des pointures extrêmes et médianes.

Ainsi, en fonction de la taille de la chaussure, son introduction sur la buse 4 sera limitée par la venue en butée de l'un des disques 10a du cône contre le bord supérieur de sa tige, et on empêchera ainsi que la buse ne pénètre trop loin à l'intérieur de la chaussure, et ne vienne détériorer celui-ci. Le cas représenté à la figure 2 correspond à une pointure moyenne, la chaussure étant en butée contre le disque du milieu.

Le plus petit disque 10a correspond-à une petite pointure et le plus grand disque correspond à une plus grande pointure.

Bien entendu, le cône 10 pourrait être réalisé d'une autre façon, il pourrait également être remplacé par d'autres moyens de butée constitués par exemple par une tige de longueur réglable, non représenté sur le dessin, à l'extrémité libre 4a de buse et coopérant avec le fond 15 de la chaussure pour maintenir l'espacement souhaité entre celui-ci et la buse 4.

Cependant, le cône 10 présente également l'avantage supplémentaire de fermer la demi ouverture supérieure de la chaussure, c'est-à-dire la partie d'ouverture de la chaussure disposée entre l'arrière de cette chaussure et la buse, et donc d'empêcher l'air chaud de sortir par cette ouverture.

De ce fait, l'air chaud ne peut que sortir par le dessous de la buse 4 et il est créé un sens de circulation d'air privilégié, représenté par les flèches 20, dans la zone talon/cou de pied, malléoles de la chaussure et le long de la languette 14 de la chaussure.

Une telle construction optimise donc l'utilisation de l'air chaud et la rapidité et qualité de chauffage.

Le cône 10 participe également au maintien de chaque chaussure sur son siège 2 et au positionnement correct de la buse à l'intérieur de celle-ci en venant s'adapter au contour de la demi-ouverture arrière de la chaussure.

La figure 2 montre le positionnement optimal souhaité de la buse à l'intérieur d'une chaussure, à savoir relativement centré par rapport à la garniture intérieure de celle-ci. Eventuellement, une butée élastique, telle qu'une lame/ressort (non représentée sur le dessin), pourrait être prévue sur la partie inférieure de la buse, c'est-à-dire à l'opposé du cône 10, pour coopérer avec la partie cou de pied/languette de la garniture et garantir parfaitement le positionnement souhaité de la buse,

La figure 3 montre plus particulièrement l'alimentation en airchaud de chaque buse 4. Cette alimentation se produit à partir d'une source d'air chaud 18, de type connu en soi et non décrite plus avant, et produisant de l'air chaud à une température comprise entre 120° et 140°, et de préférence à 130°C. Cet air chaud est canalisé par une conduite 17 qui est reliée à la tubulure d'alimentation 8 des buses 4. Un interrupteur 21 placé sur la face supérieure la du dispositif permet la mise en route/arrêt du dispositif de chauffage.

Chacune des buses 4 est montée directement sur la tubulure et communique avec l'intérieur de celle-ci par une ouverture 8a.

Par ailleurs, chaque buse 4 est montée avec une possibilité de pivotement relatif sur la tubulure 8, des butées 19 ménagées sur la partie supérieure la du dispositif de chauffage limitant l'angle de pivotement de ces buses.

Ce pivotement permet en fait un certain débattement des buses en vue de faciliter leur mise eh place à l'intérieur de chaque chaussure, et leur adaptation aux différentes pointures.

Bien entendu, la présente invention n'est pas limitée au seul mode de réalisation décrit ci-avant à titre d'exemple non limitatif.

On notera que le procédé et le dispositif selon l'invention sont particulièrement intéressants puisqu'ils permettent un thermoformage de garniture de chaussure non limité à une garniture intérieure amovible, tel que les procédés connus jusqu'à présent et peuvent donc être utilisés pour le thermoformage de garnitures intérieures fixes.

L'invention a été décrite en liaison avec le thermoformage de la zone périmétrique talon/cou de pied et languette d'une garniture intérieure, qui sont les zones privilégiées de thermoformage. Elle pourrait bien évidemment être adaptée à d'autres zones de thermoformage.

## Revendications

1. Procédé de thermoformage d'au moins une partie de garniture intérieure de chaussure présentant une tige externe rigide, **caractérisé en ce qu'**il consiste à :
- envoyer par l'intermédiaire d'au moins une sortie (6, 7) sur au moins ladite partie (13, 14) de garniture disposée à l'intérieur de la chaussure de l'air chaud à une température comprise entre 120° et 140°,
- tout en garantissant une distance minimale prédéterminée entre chaque sortie (6, 7) d'air chaud et ladite partie (13, 14) de garniture.

2. Procédé selon la revendication 1, **caractérisé en ce qu'**il consiste à disposer la chaussure à plat et à l'envers par rapport au système (4) de distribution d'air chaud, de façon que la chaleur reste piégée à l'intérieur de la chaussure.

3. Dispositif de thermoformage pour la mise en oeuvre du procédé selon l'une des revendications 1 ou 2, **caractérisé en ce qu'**il comporte
- au moins une buse (4) de distribution d'air chaud à une température comprise entre 120°C et 140°C apte à être introduite à l'intérieur de chaque chaussure (1) munie de sa gamiture intérieure,
- des moyens de positionnement de la buse à l'intérieur de la chaussure, garantissant une distance minimale prédéterminée entre la sortie de la buse d'air chaud et la garniture intérieure.

4. Dispositif de thermoformage selon la revendication 3, **caractérisé en ce que** les moyens de positionnement de chaque buse à l'intérieur de chaque chaussure sont constitués par un siège (2) apte à recevoir l'empeigne de la chaussure.

5. Dispositif de thermoformage selon la revendication 4, **caractérisé en ce que** chaque siège (2) a un profil correspondant au profil moyen de l'empeigne (12) de la chaussure selon les différentes pointures.

6. Dispositif de thermoformage selon l'une des revendications 3 ou 4, **caractérisé en ce que** les moyens de positionnement de chaque buse à l'intérieur de chaque chaussure comportent une butée (10) limitant l'introduction de celle-ci à l'intérieur de la chaussure.

7. Dispositif de thermoformage selon la revendication 6, **caractérisé en ce que** la butée (10) est réglable en fonction des pointures.

8. Dispositif de thermoformage selon l'une des revendications 6 ou 7, **caractérisé en ce que** la butée est placée à l'extrémité libre (4a) de la buse et coopère avec le fond (15) de l'intérieur de la chaussure.

9. Dispositif de thermoformage selon l'une des revendications 6 ou 7, **caractérisé en ce que** la butée (10) coopère avec l'extrémité supérieure (16) de la chaussure.

10. Dispositif de thermoformage selon rune quelconque des revendications 3 à 9, **caractérisé en ce que** la buse (4) a une forme légèrement galbée.

11. Dispositif de thermoformage selon l'une quelconque des revendications 3 à 10, **caractérisé en ce que** la buse (4) est reliée à une extrémité (4b) à une source d'air chaud (18) et est montée pivotante au niveau de cette extrémité.

12. Dispositif de thermoformage selon l'une quelconque des revendications 3 à 11, **caractérisé en ce que** la buse (4) est fermée à son extrémité (4a) libre et comporte en retrait de cette extrémité au moins deux orifices (6) de passage d'air chaud diamétralement opposés.

13. Dispositif de thermoformage salon la revendication 12, **caractérisé en ce que** la buse (4) comporte au moins un troisième orifice de chauffage (7) disposé en vis à vis de la languette de la garniture.

14. Dispositif de thermoformage selon l'une quelconque des revendications 3 à 13, **caractérisé en ce que** la buse (4) est munie de cannelures (5) surtoute sa longueur.

15. Dispositif de thermoformage selon l'une quelconque des revendications 3 à 14, **caractérisé en ce que** la buse (4) comporte des moyens (10) d'obturation de l'ouverture de la tige de la chaussure entre cette buse (4) et la partie arrière de la tige.

16. Dispositif de thermoformage selon les revendications 15 et 9, **caractérisé en ce que** les moyens d'obturation sont constitués par la butée (10).

17. Garniture en combinaison avec le dispositif selon l'une des revendications 3 à 16, **caractérisée en ce que** la garniture comporte un matériau thermoformable sur toute la zone périmétrique talon/cou de pied (13) et sur la languette (14).

18. Garniture et dispositif selon la revendication 17, **caractérisée en ce que** la garniture est amovible.

19. Garniture et dispositif selon la revendication 17, **caractérisée en ce que** la garniture est fixée à l'intérieur de la chaussure.

## Patentansprüche

1. Verfahren für eine Thermo-Formung zumindest eines Teils einer Innen-Ausfütterung eines Schuhs, der einen steifen äußeren Schaft aufweist, **dadurch gekennzeichnet, dass** es aufweist:
- Leiten von heißer Luft bei einer Temperatur zwischen 120° und 140° mittels zumindest eines Ausgangs (6, 7) auf zumindest den Teil (13, 14) einer Ausfütterung, der im Inneren des Schuhs angeordnet ist,
- wobei gleichzeitig ein minimaler vorbestimmter Abstand zwischen jedem Ausgang (6, 7) von Heißluft und dem Teil (13, 14) der Ausfütterung garantiert wird.

2. Verfahren nach Anspruch 1, **dadurch gekennzeichnet, dass** es darin besteht, den Schuh flach und umgekehrt im Verhältnis zum System (4) für eine Verteilung von Heißluft anzuordnen, derart, dass die Wärme im Inneren des Schuhs zurückgehalten bleibt.

3. Vorrichtung für eine Thermo-Formung für das Durchführen des Verfahrens gemäß einem der Ansprüche 1 oder 2, **dadurch gekennzeichnet, dass** sie aufweist:
- zumindest eine Düse (4) für eine Verteilung von Heißluft mit einer Temperatur zwischen 120° C und 140° C, die angepasst ist, ins Innere jedes Schuhs (1), der mit seiner Innen-Ausfütterung versehen ist, eingeführt zu werden,
- Positioniermittel der Düse im Inneren des Schuhs, welche einen vorbestimmten minimalen Abstand zwischen dem Ausgang der Düse für Heißluft und der Innen-Ausfütterung garantieren.

4. Vorrichtung für ein Thermo-Formen gemäß Anspruch 3, **dadurch gekennzeichnet, dass** die Positioniermittel jeder Düse im Inneren jedes Schuhs durch einen Sitz (2) gebildet sind, der geeignet ist, das Oberteil des Schuhs aufzunehmen.

5. Vorrichtung für ein Thermo-Formen gemäß Anspruch 4, **dadurch gekennzeichnet, dass** jeder Sitz (2) ein Profil aufweist, das dem mittleren Profil des Oberteils (12) des Schuhs entsprechend den verschiedenen Größen entspricht.

6. Vorrichtung für eine Thermo-Formung gemäß einem der Ansprüche 3 oder 4, **dadurch gekennzeichnet, dass** die Positioniermittel jeder Düse im Inneren jedes Schuhs einen Anschlag (10) aufweisen, der das Einführen derselben ins Innere des Schuhs begrenzt.

7. Vorrichtung für eine Thermo-Formung gemäß Anspruch 6, **dadurch gekennzeichnet, dass** der Anschlag (10) in Abhängigkeit der Größen einstellbar ist.

8. Vorrichtung für eine Thermo-Formung gemäß einem der Ansprüche 6 oder 7, **dadurch gekennzeichnet, dass** der Anschlag am freien Ende (4a) der Düse angeordnet ist und mit dem Boden (15) des Inneren des Schuhs zusammenwirkt.

9. Vorrichtung für eine Thermo-Formung gemäß einem der Ansprüche 6 oder 7, **dadurch gekennzeichnet, dass** der Anschlag (10) mit dem oberen Ende (16) des Schuhs zusammenwirkt.

10. Vorrichtung für eine Thermo-Formung gemäß irgendeinem der Ansprüche 3 bis 9, **dadurch gekennzeichnet, dass** die Düse (4) eine leicht ausgebauchte Form aufweist.

11. Vorrichtung für eine Thermo-Formung gemäß irgendeinem der Ansprüche 3 bis 10, **dadurch gekennzeichnet, dass** die Düse (4) mit einem Ende (4b) mit einer Heißluftquelle (18) verbunden ist und schwenkbar auf Höhe dieses Endes montiert ist.

12. Vorrichtung für eine Thermo-Formung gemäß irgendeinem der Ansprüche 3 bis 11, **dadurch gekennzeichnet, dass** die Düse (4) an ihrem freien Ende (4a) geschlossen ist und zurückspringend von diesem Ende zumindest zwei Öffnungen (6) für einen Durchgang von Heißluft aufweist, die diametral gegenüberliegend sind.

13. Vorrichtung für eine Thermo-Formung gemäß Anspruch 12, **dadurch gekennzeichnet, dass** die Düse (4) zumindest eine dritte Heizöffnung (7) aufweist, die der Zunge der Ausfütterung gegenüberliegend angeordnet ist.

14. Vorrichtung für eine Thermo-Formung gemäß irgendeinem der Ansprüche 3 bis 13, **dadurch gekennzeichnet, dass** die Düse (4) mit Rillen (5) über ihre gesamte Länge versehen ist.

15. Vorrichtung für eine Thermo-Formung gemäß irgendeinem der Ansprüche 3 bis 14, **dadurch gekennzeichnet, dass** die Düse (4) Mittel (10) für ein Verschließen der Öffnung des Schaftes des Schuhs zwischen dieser Düse (4) und dem hinteren Teil des Schaftes aufweist.

16. Vorrichtung für eine Thermo-Formung gemäß den Ansprüchen 15 und 9, **dadurch gekennzeichnet, dass** die Mittel für ein Verschließen durch den Anschlag (10) gebildet sind.

17. Ausfütterung in Kombination mit der Vorrichtung gemäß einem der Ansprüche 3 bis 16, **dadurch gekennzeichnet, dass** die Ausfütterung ein thermoformbares Material über die gesamte perimetrische Absatz/Fußhals-Zone (13) und über die Zunge (14) aufweist.

18. Ausfütterung und Vorrichtung gemäß Anspruch 17, **dadurch gekennzeichnet, dass** die Ausfütterung abnehmbar ist.

19. Ausfütterung und Vorrichtung gemäß Anspruch 17, **dadurch gekennzeichnet, dass** die Ausfütterung im Inneren des Schuhs befestigt ist.

## Claims

1. Process for heating at least one portion of the inner fitting of a boot having a rigid external upper, **characterized in that** it consists of:
- sending hot air by means of an exit (6, 7), at a temperature comprised between 120° and 140°, on at least said portion (13, 14) of the fitting arranged within the boot,
- guaranteeing at the same time a predetermined minimum distance between each exit (6, 7) of hot air and said portion (13, 14) of the fitting.

2. Process according to claim 1, **characterized in that** it consists of positioning the boot flat and on the wrong side with respect to the hot air distribution system (4), such that the heat remains trapped within the boot.

3. Heating device for implementing the process according to one of claims 1 or 2, **characterized in that** it comprises:
- at least one hot air distribution nozzle (4) with hot air at a temperature comprised between 120° C and 140° C capable of being introduced inside each boot (1) provided with its internal fitting,
- means for positioning the nozzle within the boot, guaranteeing a predetermined minimum distance between the exit of the hot air nozzle and the inner fitting.

4. Heating device according to claim 3, **characterized in that** the means for positioning each nozzle within each boot are constituted by a seat (2) that is capable of receiving the boot vamp.

5. Heating device according to claim 4, **characterized in that** each seat (2) has a contour corresponding to the average contour of the boot vamp (12) depending on the various sizes.

6. Heating device according to one of claims 3 or 4, **characterized in that** the means for positioning each nozzle within each boot comprises an abutment (10) that limits the introduction thereof inside the boot.

7. Heating device according to claim 6, **characterized in that** the abutment (10) is adjustable depending on the sizes.

8. Heating device according to one of claims 6 or 7, **characterized in that** the abutment is placed at the free and (4a) of the nozzle and cooperates with the bottom (15) of the inside of the boot.

9. Heating device according to one of claims 6 or 7, **characterized in that** the abutment (10) cooperates with the upper end (16) of the boot.

10. Heating device according to any of claims 3 to 9, **characterized in that** the nozzle (4) has a slightly curved shape.

11. Heating device according to any of claims 3 to 10, **characterized in that** the nozzle (4) is connected at an end (4b) to a hot air source (18) and is pivotally mounted at the level of this end.

12. Heating device according to any of claims 3 to 11, **characterized in that** the nozzle (4) is closed at its free end (4a) and comprises, behind this end, at least two diametrically opposed openings (6) for the passage of hot air.

13. Heating device according to claim 12, **characterized in that** the nozzle (4) comprises at least a third heating opening (7) arranged opposite the tongue of the fitting.

14. Heating device according to any of claims 3 to 13, **characterized in that** the nozzle (4) is provided with grooves (5) along its entire length.

15. Heating device according to any of claims 3 to 14, **characterized in that** the nozzle (4) comprises means (10) for blocking the opening of the boot upper between this nozzle (4) and the rear portion of the upper.

16. Heating device according to claims 15 and 9, **characterized in that** the blocking means are constituted of the abutment (10).

17. Fitting in combination with the device according to any of claims 3 to 16, **characterized in that** the fitting comprises a thermoformable material over the entire heel/instep perimetric zone (13) and over the tongue (14).

18. Fitting and device according to claim 17, **characterized in that** the fitting is removable.

19. Fitting and device according to claim 17, **characterized in that** the fitting is attached within the boot.
